# EUROPÄISCHE PATENTANMELDUNG

(11) **EP 1 190 947 A1**
(43) Veröffentlichungstag der Anmeldung: **27.03.2002**
(21) Anmeldenummer: 01119244.0
(22) Anmeldetag: 28.04.1995
(51) Int. Cl.: B64F 1/22

(54) **Schleppfahrzeug zum Manövrieren von Flugzeugen**

(30) Priorität: 02.05.1994 DE 4415405
(62) Teilanmeldung aus: 95919355.8
(71) Anmelder: Mannesmann Demag Krauss-Maffei AG, 80997 München (DE)
(72) Erfinder: Pollner, Jürgen, 81245 München (DE); Fuchs, Thomas, 80997 München (DE)
(74) Vertreter: Wilhelm, Ludwig

(57) **Zusammenfassung**

Bei einem Schleppfahrzeug (1) zum Manövrieren von Flugzeugen (11) ohne Schleppstange, dessen Fahrgestell (5) zwischen den Rädern (6) einer koaxialen Radaufhängung einen gabelförmigen Aufnahmeraum (7) aufweist, in dem eine an einer Hubschaufel (8) befestigte, ein- und ausfahrbare Greif- und Einzugsvorrichtung (9) angeordnet ist, mittels welcher das Bugrad (10) eines Flugzeuges (11) erfassbar und auf die relativ zum Fahrgestell (5) mittels zweier symmetrisch zueinander zwischen Fahrgestell (5) und Hubschaufel (8) angeordneter Fluid-Kolben-Zylinder-Einheiten (12) sowohl um eine Querachse als auch zur Anpassung an Schräglagen eines aufgenommenen Bugrades (10) um eine Längsachse schwenkbare Hubschaufel (8) ziehbar ist, ist die Hubschaufel (8) mittels eines am Fahrgestell (5) des Schleppfahrzeuges (1) befestigten Kugelgelenks (25), das an der Rückseite der Hubschaufel (8) mittig angreift, nach allen Seiten verschwenkbar angelenkt. Ferner ist mindestens eine, im Abstand vom Kugelgelenk (25) ober- oder unterhalb desselben an der Hubschaufel (8) angreifende, Fluid-Kolben-Zylinder-Einheit (12) an die Hubschaufel (8) anhebender Stellung mechanisch verriegel- und entriegelbar.

## Beschreibung

Die Erfindung betrifft ein Schleppfahrzeug zum Manövrieren von Flugzeugen ohne Schleppstange, dessen Fahrgestell zwischen den Rädern einer Radachse einen gabelförmigen Aufnahmeraum aufweist, in dem eine an einer Hubschaufel befestigte ein- und ausfahrbare Greif- und Einzugsvorrichtung angeordnet ist, mittels welcher das Bugrad eines Flugzeuges erfassbar und auf die relativ zum Fahrgestell mittels zweier symmetrisch zueinander zwischen Fahrgestell und Hubschaufel angeordneter Fluid-Kolben-Zylinder-Einheiten sowohl um eine Querachse als auch zur Anpassung an Schräglagen eines aufgenommenen Bugrades um eine Längsachse schwenkbare Hubschaufel ziehbar ist.

Es ist ein Schleppfahrzeug dieser Bauart bekannt (DE-OS 38 01 855), bei welchem die Hubschaufel über untere und obere Längslenker hebbar, senkbar und wahlweise in eine Winkellage neigbar am Fahrgestell angeordnet und über Fluid-Kolben-Zylinder-Einheiten betätigbar ist, wobei die oberen und unteren Längslenker ein Gestänge bilden, das einerseits am Fahrgestell und andererseits an der Schaufel angelenkt ist. Um zu ermöglichen, dass die Hubschaufel sich selbsttätig einer Neigung des Bugrades anpasst, sollen sich die Wirkungslinien der oberen Längslenker in einem einen Pendelpunkt der Hubschaufel bildenden Punkt auf einer gedachten Längsachse schneiden. Dabei können die Längslenker als Fluid-Kolben-Zylinder-Einheiten ausgebildet sein, die zur selbsttätigen Einstellung der Winkellage der Hubschaufel unter dem Einfluss des Bugrades des transportierten Flugzeugs bei Kurvenfahrt bezüglich ihres Fluids kommunizierend miteinander verbunden sind. Bei einem Fluidverlust infolge Undichtwerdens der Hydraulikanlage bzw. Bruch eines Hydraulikschlauches kann nachteiligerweise ein schlagartiges Absenken der Hubschaufel mit wahrscheinlicher Beschädigung des Bugrades bzw. seiner Aufhängung am Flugzeug erfolgen. Ferner ist die Verwendung von zwei oberen Längslenkern, deren Wirkungslinien sich in einem einen Pendelpunkt der Schaufel bildenden Punkt auf der gedachten Längsachse schneiden müssen, aufwendig.

Die der Erfindung zugrunde liegende Aufgabe wird demgegenüber darin gesehen, ein Schleppfahrzeug der eingangs genannten Bauart zu schaffen, welches einen Verzicht auf obere Längslenker ermöglicht und bei welchem ein Undichtwerden der Fluidversorgung für die beiden Fluid-Kolben-Zylinder-Einheiten nicht mehr die erwähnten Folgen haben kann.

Diese Aufgabe wird erfindungsgemäß bei dem eingangs genannten Schleppfahrzeug dadurch gelöst, dass die Hubschaufel mittels eines am Fahrgestell des Schleppfahrzeuges befestigten Kugelgelenks, das an der Rückseite der Hubschaufel mittig angreift, nach allen Seiten schwenkbar angelenkt ist und dass mindestens eine, im Abstand vom Kugelgelenk ober- oder unterhalb desselben an der Hubschaufel angreifenden Fluid-Kolben-Zylinder-Einheit in die Hubschaufel anhebender Stellung mechanisch verriegel- und entriegelbar ist.

Die Verwendung eines Kugelgelenks anstelle von zwei speziell angeordneten Längslenkern führt zu einer besonders einfachen und stabilen, unaufwendigen Konstruktion, die trotzdem die erforderlichen Freiheitsgrade der Hubschaufel gewährleistet. Zwar lässt sich dabei die Hubschaufel nicht mehr als Ganzes anheben, das ist jedoch gar nicht erforderlich, es genügt bereits, wenn die Fluid-Kolben-Zylinder-Einheit bei ihrer Beaufschlagung mit unter Druck stehendem Fluid die Hubschaufel kippt, wobei sich der untere Bereich der Hubschaufel hebt, wodurch auch das aufruhende Bugrad angehoben wird. Es handelt sich dabei somit um ein Kippen der Hubschaufel um eine durch den Mittelpunkt des Kugelgelenks gehende Querachse.

Da die zumindest eine Fluid-Kolben-Zylinder-Einheit, nachdem sie die Hubschaufel hochgekippt hat, mechanisch verriegelt wird, wirkt sie anschließend als Lenker, der einerseits die Hubschaufel gegen ein Abkippen unter Last abstützt und andererseits durch ihre einerseits am Fahrgestell und andererseits an der Hubschaufel erfolgte Kugelgelenklagerung eine Führung bildet, wenn bei Kurvenfahrten das Bugrad eine Schrägstellung bzw. ein Verschwenken der Hubschaufel um eine durch den Mittelpunkt des die Hubschaufel oben mittig haltenden Kugelgelenks gehende, gedachte Längsachse erzwingt.

Bei Vorhandensein lediglich einer einzigen, oberhalb des Kugelgelenks mittig an der Hubschaufel angreifenden Fluid-Kolben-Zylinder-Einheit ist grundsätzlich ein seitlicher Längslenker vorhanden, der ein sonst mögliches Verschwenken der Hubschaufel um die Hochachse verhindert.

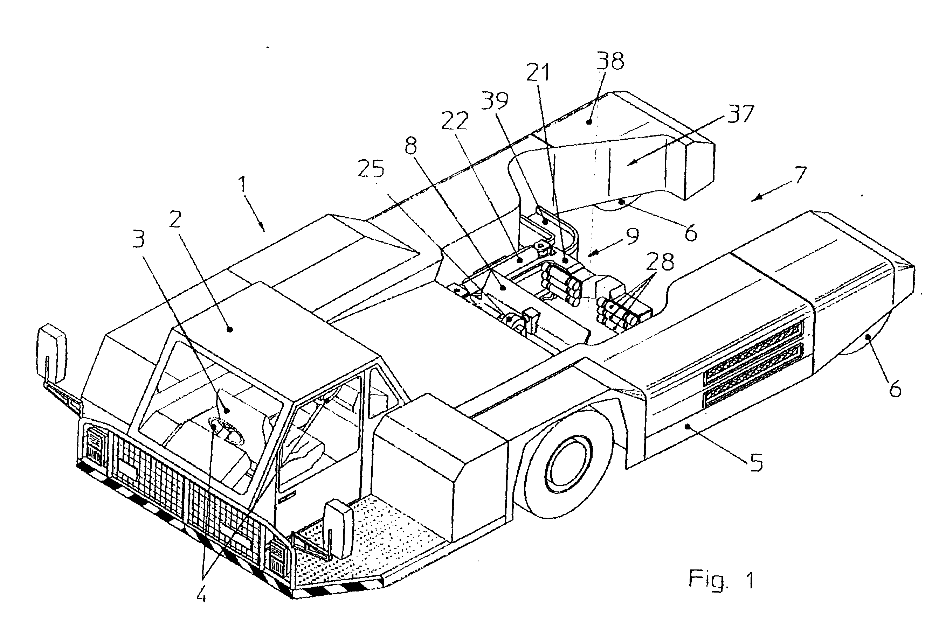

Gemäß einer bevorzugten Ausführungsform sind zwei zueinander symmetrisch angeordnete Fluid-Kolben-Zylinder-Einheiten vorgesehen, die unterhalb des im oberen Bereich der Hubschaufel 8 angreifenden Kugelgelenks 25 an der Hubschaufel 8 angelenkt sind (Fig. 1 - 7).

Die Erfindung ist im Folgenden anhand eines in der Zeichnung dargestellten Ausführungsbeispiels näher erläutert.

Es zeigt:
- Fig. 1: eine schaubildliche Ansicht des erfindungsgemäßen Schleppfahrzeuges schräg von vorn oben mit eingeschwenkter Greif- und Einzugsvorrichtung;
- Fig. 2: eine Draufsicht auf das Schleppfahrzeug nach Figur 1 mit unterschiedlichen Stellungen der Greif- und Einzugsvorrichtung in vergrößertem Maßstab;
- Fig. 3: einen Schnitt längs der Linie A-A in Figur 2 zur Darstellung von Einzelheiten der Greif- und Einzugsvorrichtung in nochmals vergrößertem Maßstab;
- Fig. 4: eine Seitenansicht der Hubschaufel in Pfeilrichtung B in Figur 2 mit der Greif- und Einzugsvorrichtung in Offenstellung sowie der Aufhängung der Hubschaufel am Fahrgestell des Schleppfahrzeuges;
- Fig. 5: eine der Figur 4 entsprechenden Seitenansicht bei geschlossener Greif- und Einzugsvorrichtung mit zwischen Hubschaufel und Greif- und Einzugsvorrichtung erfasstem, strichpunktiert dargestelltem Bugrad;
- Fig. 6: eine den Figuren 4 und 5 entsprechende Seitenansicht mit hochgeschwenkter Hubschaufel nebst Greif- und Einzugsvorrichtung mit dem durch das Hochkippen angehobenen Bugrad;
- Fig. 7: eine Rückansicht gemäß Pfeilrichtung G in Figur 6 zur Darstellung von Hubschaufel und Greif- und Einzugsvorrichtung in ein doppeltes Bugrad erfassender, dasselbe angehoben habender und bei Kurvenfahrt in Schräglage befindlicher Stellung;
- Fig. 8: eine der Fig. 2 entsprechende Draufsicht auf eine zweite Ausführungsform;
- Fig. 9: eine der Fig. 6 entsprechende Seitenansicht der zweiten Ausführungsform nach Fig. 8

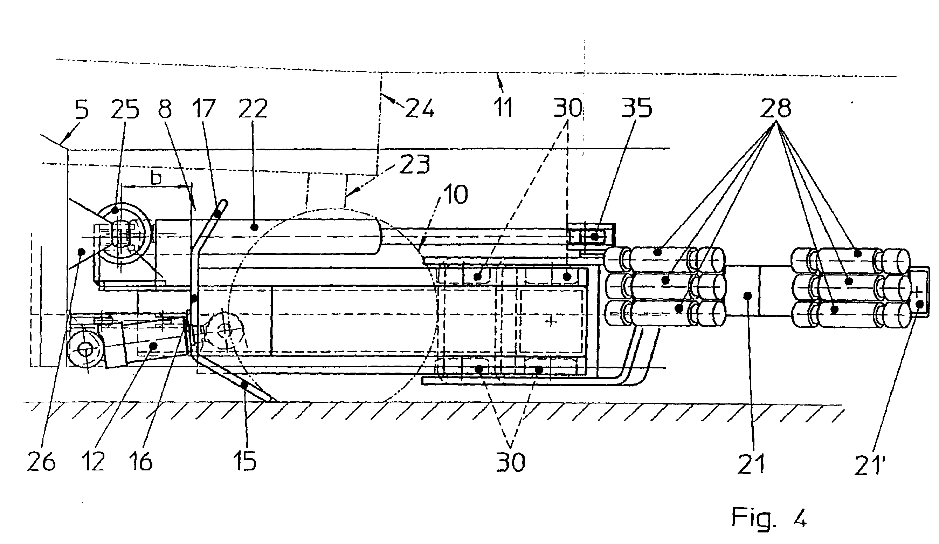

Das gezeigte Schleppfahrzeug 1 besitzt gemäß Figur 1 eine Fahrerkabine 2 mit Wendesitz 3 und zwei Lenkeinrichtungen 4, so dass der Fahrer in der Lage ist, unabhängig von jeweils Vorwärts- oder Rückwärtsfahrt immer in Fahrtrichtung zu steuern. Das Fahrgestell 5 dieses Schleppfahrzeuges 1 weist zwischen den voneinander unabhängig aufgehängten Rädern 6 einer Achse einen gabelförmigen Aufnahmeraum 7 auf, in dem eine an einer Hubschaufel 8 befestigte, ein- und ausfahrbare Greif- und Einzugsvorrichtung 9 angeordnet ist, mittels welcher das Bugrad 10 eines Flugzeuges 11 erfassbar ist (Figuren 1 und 4). Beim Erfassen des Bugrades 10 wird dasselbe auf die relativ zum Fahrgestell 5 sowohl um eine Querachse 14 als auch zur Anpassung an Schräglagen eines aufgenommenen Bugrades 10 um eine Längsachse 13 schwenkbare Hubschaufel 8 ziehbar.

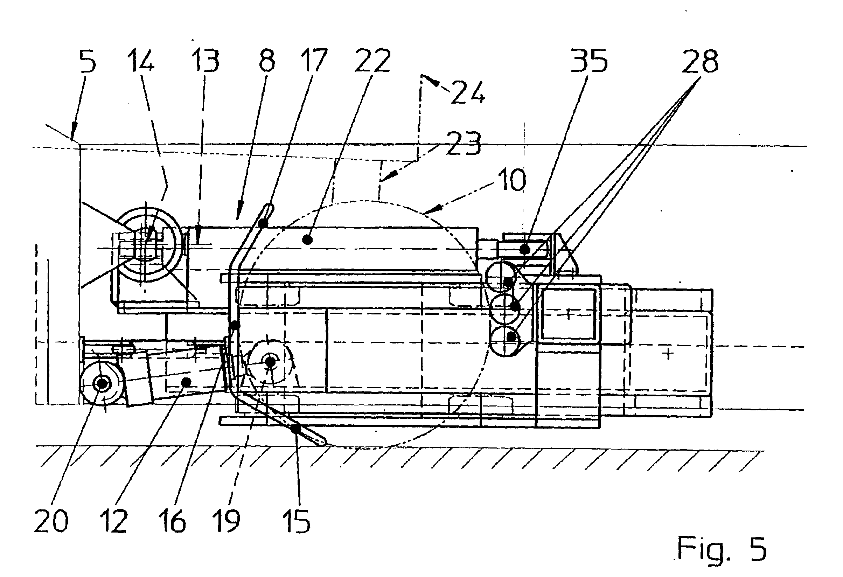

Das Verschwenken der Hubschaufel 8 geschieht mittels zweier symmetrisch zueinander zwischen Fahrgestell 5 und Hubschaufel 8 angeordneter Fluid-Kolben-Zylinder-Einheiten 12. Wie die Figuren 4 und 5 besonders deutlich zeigen, ist die Hubschaufel 8 im Querschnitt abgewinkelt ausgebildet, und zwar mit einer bis auf den Boden absenkbaren Auflauframpe 15, einer Abstützwand 16 und einer Niederhaltewand 17.

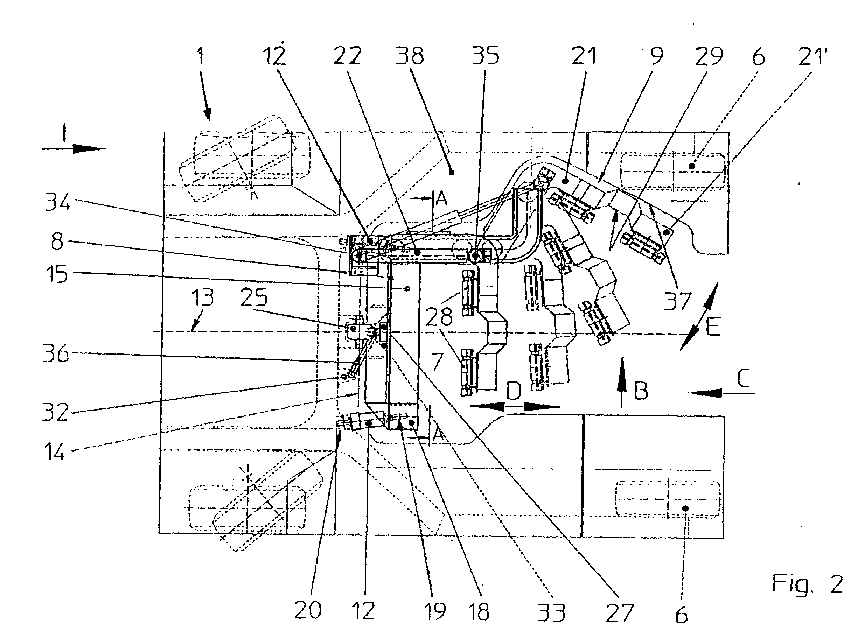

Wie aus Figur 2 zu entnehmen, ist die Hubschaufel seitlich zur Bildung von Widerlagern verstärkt, an denen die Fluid-Kolben-Zylinder-Einheiten 12 kolbenseitig über Achslager 19 und zylinderseitig über Achslager 20 am Fahrgestell 5 angelenkt sind.

An einer Seite der Hubschaufel 8, in der Draufsicht gemäß Figur 2 ist diese Seite oben dargestellt, ist eine winkelförmige Kulisse 39 zur gesteuerten Führung eines Winkelhebels 21 befestigt, der mittels einer Kolben-Zylinder-Einheit 22 in Richtung des Doppelpfeils D (Figur 2) ein- und ausfahrbar und außerdem auch noch in Richtung des Doppelpfeils E verschwenkbar ist. Diese Elemente bilden gemeinsam die Greif- und Einzugsvorrichtung 9 für das aus den Figuren 4 und 5 entnehmbare Bugrad 10 eines Flugzeuges 11, das in Figur 4 mit seiner unteren Kontur strichpunktiert angedeutet ist. Die dazugehörige Bugradstütze ist bei 23, die offenstehende Abdeckung des Fahrwerkschachtes bei 24 angedeutet.

Erfindungsgemäß ist nun die Hubschaufel 8 mittels eines am Fahrgestell 5 des Schleppfahrzeuges 1 befestigten Kugelgelenks 25 nach allen Seiten schwenkbar angelenkt, das an der Rückseite der Hubschaufel 8, bei der gezeigten, bevorzugten Ausführungsform in deren oberen Bereich, mittig angestreift (Figuren 2 und 4). Zur Befestigung des Kugelgelenks am Fahrgestell 5 dient ein Lagerblock 26, zur Befestigung an der Rückwand der Hubschaufel ein dort angeordneter Lagerblock 27.

Die Funktion ist wie folgt:

Das Schleppfahrzeug 1 fährt bei der in Figur 2 dargestellten Offenstellung der Greif- und Einzugsvorrichtung 9 in Pfeilrichtung 1 auf das Flugzeug 11 zu, bis sich das Bugrad 10 in der in Figur 4 dargestellten Stellung in Anlage an der Auffahrrampe 15 der Hubschaufel 8 befindet.

Den Weg des Bugrades in Pfeilrichtung C an den gabelförmigen Aufnahmeraum 7 hinein ermöglicht der Winkelhebel 21 in seiner in Figur 2 mit ausgezogenen Linien dargestellten Stellung dadurch, dass er sich in einer entsprechend winkelförmigen Ausnehmung 37 des Auslegers 38 befindet, in die er sich mit Hilfe der Kolben-Zylinder-Einheit 22 hineinschwenken lässt. Die winkelförmige Kulissenführung 39 bildet dabei eine Zwangsführung, in der der Winkelhebel 21 anschließend wieder zurückgeschwenkt werden kann, um am Bugrad 10 mittels Tripelrollen 28 zur Anlage zu kommen. Der Winkelhebel 21 ist dabei strichpunktiert in verschiedenen unterschiedlichen Lagen bzw. Stellungen in Figur 2 dargestellt, die er beim Ein- und Ausschwenken stufenlos einnehmen kann. Sobald die Tripelrollen 28 am Bugrad 10 zur Anlage gekommen sind, lässt sich bei weiterem Einfahren der Kolben-Zylinder-Einheit 22 das Bugrad 10 auf die Auffahrrampe 15 hinauf bis zum Anschlag an der Stützwand 16 hinaufschieben. An dieser Stelle ist darauf hinzuweisen, dass das gezeigte Ausführungsbeispiel für Doppel-Bugräder 10 vorgesehen ist, wie das Vorhandensein von zwei Tripelrollen 28 zeigt, die jeweils an einem Reifen des Doppel-Bugrades 10 anliegen. Die Einbuchtung 29 im Winkelhebel dient dazu, dem nicht gezeigten Scherenhebel des Bugrades 10 Raum zu geben.

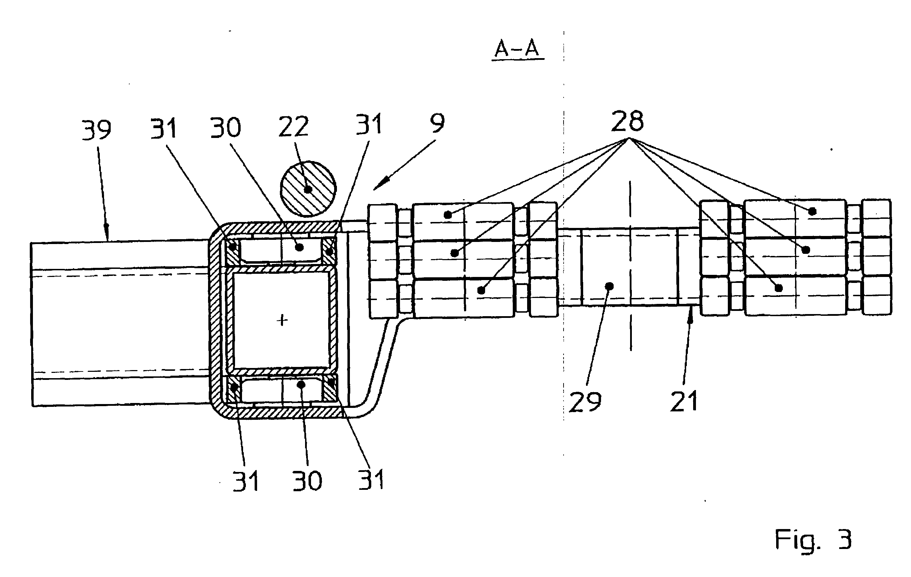

Eine bevorzugte Art der Kulissenführung geht insbesondere aus Fig. 2 und der Schnittansicht gemäß Figur 3 hervor. Demnach sind am Winkelhebel 21 jeweils zwei koaxial übereinander liegende obere und untere Rollen 30 vorgesehen, die von oberen und unteren Schienen 31 der Kulisse 39 geführt werden. Wie ersichtlich, bilden die Kulissenführung 39 einerseits und der Winkelhebel 21 andererseits einander entgegengesetzt öffnende Winkel, vorzugsweise rechte Winkel.

Es versteht sich, dass sich auf der anderen Seite der Hubschaufel 8 symmetrisch eine zweite Greif- und Einzugsvorrichtung der beschriebenen Art befinden könnte, wobei der Winkelhebel 21 natürlich nur höchstens bis zur Längsmittelebene 13 reichen dürften.
Aus der in Figur 5 gezeigten Stellung der Hubschaufel 8 mit ihrer Greif- und Einzugsvorrichtung 9 wird dieselbe dann durch Beaufschlagung der Fluid-Kolben-Zylinder-Einheiten 12 in Richtung des Doppelpfeils F hochgeschwenkt derart, dass das Bugrad 10 und damit das Flugzeug 11 entsprechend angehoben wird.

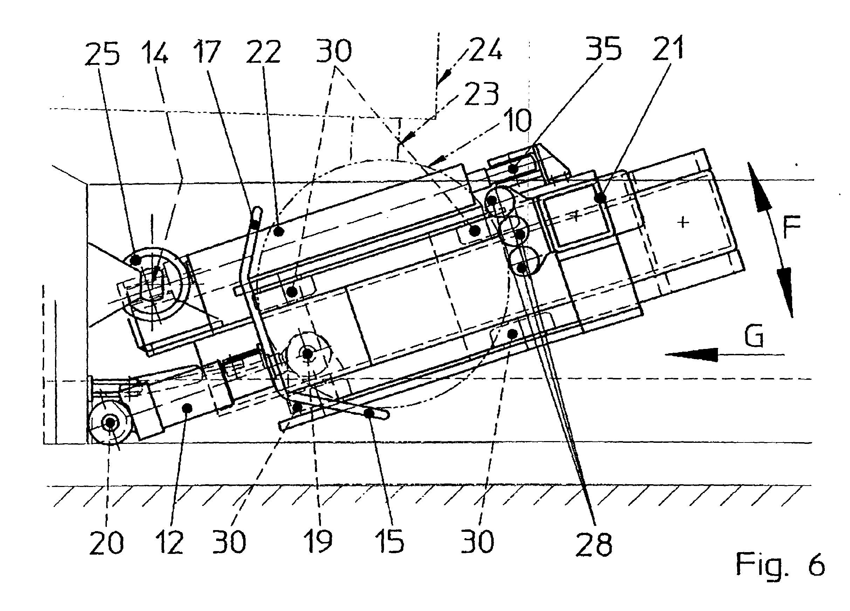

Erfindungsgemäß sind nun die beiden Fluid-Kolben-Zylinder-Einheiten 12 in der in Figur 6 gezeigten, ausgefahrenen, die Hubschaufel 8 anhebenden Stellung mechanisch verriegelbar, was im Einzelnen nicht gezeigt ist. Dadurch wird vermieden, dass bei einem plötzlichen Druckabfall im Hydrauliksystem, aus welchen Gründen auch immer, ein schlagartiges Absenken der Hubschaufel mit negativen Folgen sowohl für das Flugzeug einerseits als auch für das Schleppfahrzeug selber andererseits stattfinden kann.

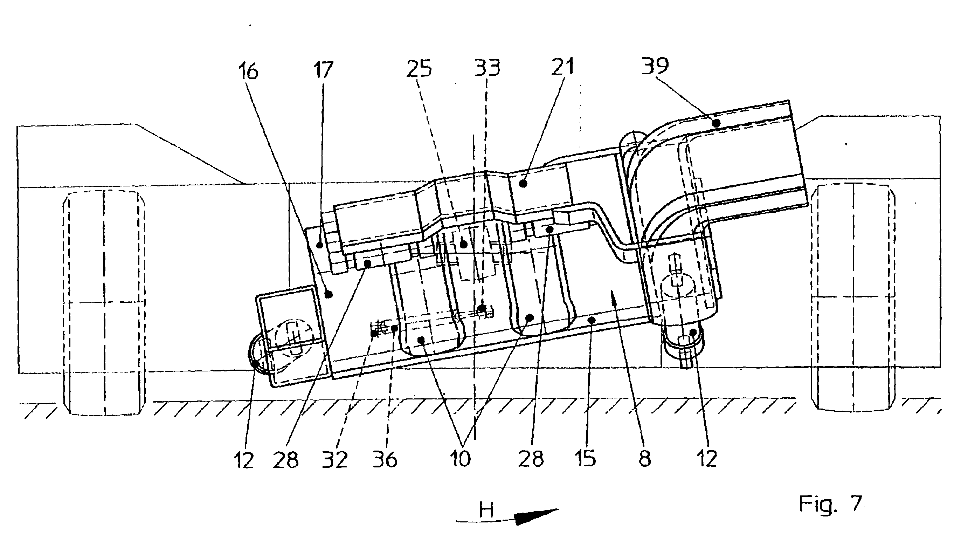

Figur 7 zeigt nun eine ausschnittsweise Rückansicht in Pfeilrichtung G in Figur 6 bei Kurvenfahrt des Fahrzeuges 1 und zwar nach links mit aufgenommenem Doppelbugrad 10. Die Einheiten 12 erhalten durch die erwähnte mechanische Verriegelung die Funktion von in ihrer Länge festliegenden Längslenkern, was Achslager 19 und 20 (Figur 2) in Form von Kugelgelenken erfordert. Figur 7 zeigt, wie die Einheiten 12 bei einer Auslenkung, hier in Pfeilrichtung H gezeigt, Folge leisten, natürlich im Falle einer Auslenkung in Gegenrichtung in entsprechend umgekehrtem Sinne. Die Führung erfolgt selbstverständlich durch das Doppel-Bugrad 10, wobei klar wird, dass ohne Bugrad beispielsweise beim Verfahren des Schleppfahrzeuges gemäß Figur 1 zu einem zu schleppenden bzw. von einem bereits geschleppten Flugzeug, ein Hin- und Herschwenken von Schaufel 8 mit Greif- und Einzugsvorrichtung 9 erfolgen könnte, wenn nicht ein Stützlenker 36 in Form einer Kolben-Zylinder-Einheit vorhanden wäre (Figuren 2 und 7), der als eine Art Traverse für Stabilität der Anordnung sorgt, solange das Schleppfahrzeug, wie gesagt, nicht beladen ist.

Nach Beladung und Übernahme der Führung durch das Bugrad 10 wird die Kolben-Zylinder-Einheit 36 natürlich drucklos gemacht, um jeder durch das Bugrad 10 hervorgerufenen Bewegung der Anordnung folgen zu können. Die Anlenkung einerseits am Fahrgestell 5 bei 32 und andererseits an der Schaufel 8 bei 33 geht besonders deutlich aus Figur 2 hervor.

Die Anlenkung der Kolben-Zylinder-Einheit 22 einerseits an der Kulisse 39 bei 34 und andererseits an dem Winkelhebel 21 bei 35 ergibt sich aus der gleichen Figur. Statt der Anlenkung an der Kulisse 39 kann eine solche auch an der Hubschaufel 8 erfolgen.

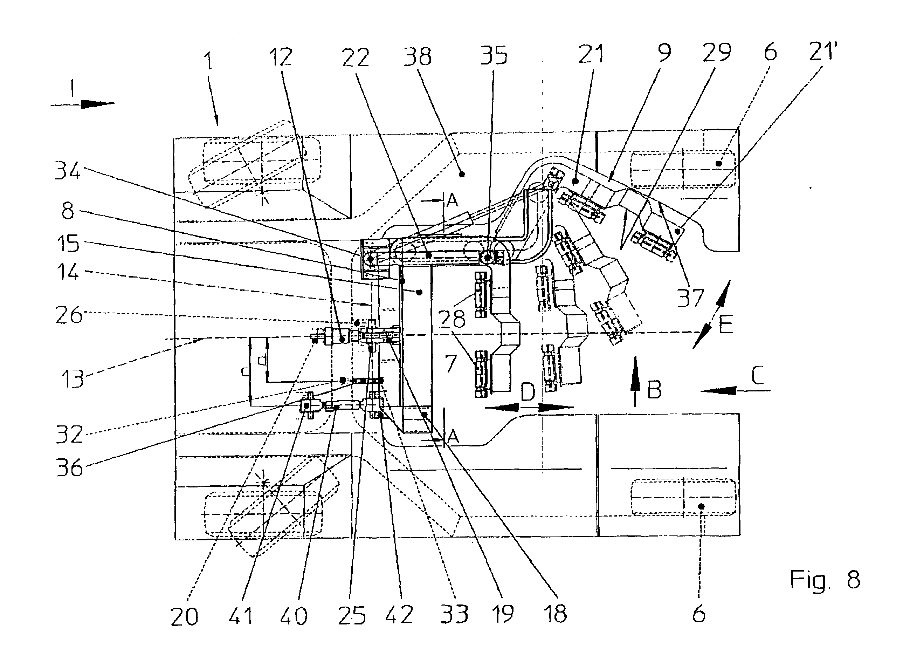

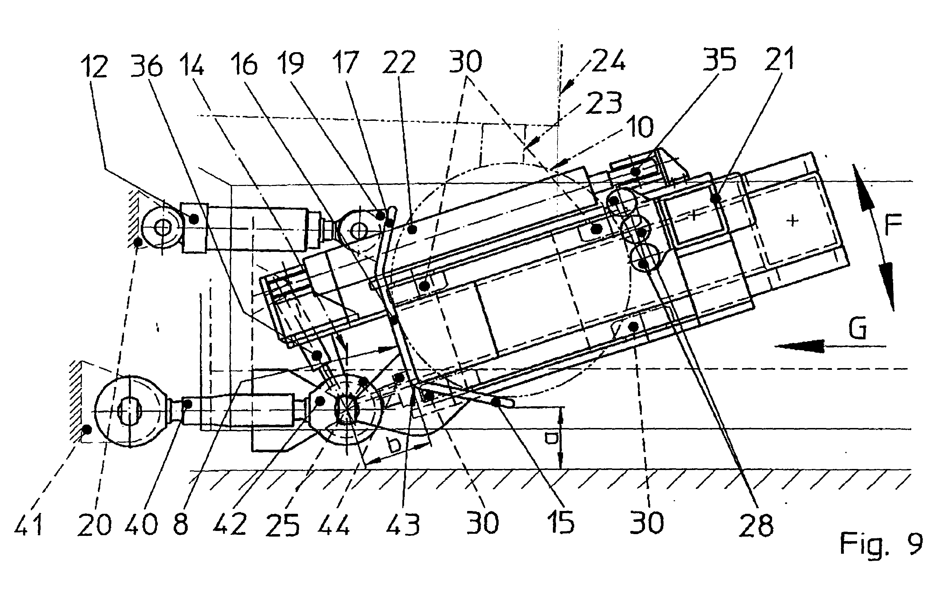

Bei der in den Figuren 8 und 9 dargestellten zweiten Ausführungsform sind gegenüber der ersten Ausführungsform gleiche Teile mit jeweils gleichen Bezugszeichen versehen worden.

Der Unterschied zur ersten Ausführungsform besteht im Wesentlichen darin, dass hier das Kugelgelenk 25 im unteren Bereich der Hubschaufel vorgesehen ist und die Befestigung des Kugelgelenks 25 am Fahrgestell 5 entsprechend tiefer liegt, während die Fluid-Kolben-Zylinder-Einheit 12, und zwar hier nur eine einzige solche Einheit, an der Niederhaltewand 17 und damit im oberen Bereich der Hubschaufel 8 angreift, somit oberhalb des Kugelgelenks 25. Es versteht sich, dass sich damit mehr oder weniger die gleiche Kinematik der Hubschaufel bei ihrem Kippen durch die durch das Kugelgelenk 25 verlaufende Querachse 14 ergibt, doch darf nicht übersehen werden, dass sich durch den unterschiedlichen Angriff des Kugelgelenks 25 an der Hubschaufel 8 unterschiedliche Anhebewege bzw. Abstände der Auffahrrampe 15 vom Boden bis in die Figuren 6 und 9 gezeigten angehobenen Stellungen ergeben. Gleicher Kippwinkel vorausgesetzt, ergibt sich natürlich bei der erstgenannten Ausführungsform nach den Figuren 1 bis 7 ein größerer Abstand der Auffahrrampe 15 der Hubschaufel 8 vom Boden als im Falle der zweiten Ausführungsform gemäß Figuren 8 und 9. Dies liegt ganz einfach an dem größeren Abstand der Auffahrrampe 15 vom Kugelgelenk 25 bei der ersten Ausführungsform gegenüber diesem Abstand bei der zweiten Ausführungsform.

Um nun diesen Abstand zu vergrößern, lässt sich, wie Figur 9 zeigt, zwischen dem unteren Bereich der Hubschaufel 8, vorzugsweise im Bereich der Abknickkante 43 zwischen Auffahrrampe 15 und Abstützwand 16 ein Support 44 anordnen, der das Kugelgelenk 25 trägt.

Je größer nun der Abstand zwischen Hubschaufel 8 und Kugelgelenk 25 ist, je mehr somit das Kippen der Hubschaufel 8 in Richtung des Doppelpfeils F zu einem Verschwenken wird, desto größer kann der Abstand a zwischen dem Boden und der Unterkante der Auffahrrampe 15 werden.

Es ist an dieser Stelle darauf hinzuweisen, dass auch bei der ersten Ausführungsform bereits ein Abstand b (Fig. 4) zwischen Abstützwand 16 und Kugelgelenk 25 vorhanden ist. Doch wie gesagt, von besonderer Bedeutung ist dieser Abstand bei der Ausführungsform nach den Figuren 8 und 9.

Diese Ausführungsform ist nun insofern von Vorteil, als sie nur eine einzige Fluid-Kolben-Zylinder-Einheit 12 zum Bewegen der Hubschaufel aufweist. Dies ist zweckmäßig in einer senkrechten, mit dem Kugelgelenk 25 gemeinsamen Längsmittelebene 13, in diesem Fall oberhalb des Kugelgelenks 25 angeordnet. Ferner ist zumindest ein seitlich im Abstand c von dem Kugelgelenk 25 vorgesehener Längslenker 40 einerseits über ein erstes Lager 41 am Fahrgestell 5 und andererseits über ein zweites Lager 42 an der Hubschaufel 8 angelenkt. Da das zweite Lager 42 zweckmäßig auf der durch das Kugelgelenk 25 verlaufenden Querachse 14 der Hubschaufel 8 sitzt, kann keinerlei seitliche Auslenkung um die Hochachse erfolgen. Um nun auch ein sonst mögliches Anheben oder Absenken der einen Seite der Hubschaufel 8 gegenüber der anderen zu verhindern, ist wiederum eine im verwinkelten Zustand einen Stützlenker 36 bildende Fluid-Kolben-Zylinder-Einheit einerseits am Fahrgestell 5 und andererseits an der Hubschaufel 8 angelenkt. Da dieser Stützlenker nun einmal ein Absenken oder Anheben einer Seite der Hubschaufel 8 verhindern soll, wird er zweckmäßig der Senkrechten zumindest angenähert eingebaut werden, wie man Fig. 9 entnimmt. Um seine Funktion erfüllen zu können, muss der Stützlenker 36 naturgemäß ebenfalls einen seitlichen Abstand d (Fig. 8) vom Kugelgelenk aufweisen.

## Patentansprüche

1. Schleppfahrzeug zum Manövrieren von Flugzeugen ohne Schleppstange, dessen Fahrgestell zwischen den Rädern einer koaxialen Radaufhängung einen gabelförmigen Aufnahmeraum aufweist, in dem eine an einer Hubschaufel befestigte, ein- und ausfahrbare Greif- und Einzugsvorrichtung angeordnet ist, mittels welcher das Bugrad eines Flugzeuges erfassbar und auf die relativ zum Fahrgestell mittels zweier symmetrisch zueinander zwischen Fahrgestell und Hubschaufel angeordneter Fluid-Kolben-Zylinder-Einheiten sowohl um eine Querachse als auch zur Anpassung an Schräglagen eines aufgenommenen Bugrades um eine Längsachse schwenkbare Hubschaufel ziehbar ist, **dadurch gekennzeichnet, dass** die an der Hubschaufel befestigte Greif- und Einzugsvorrichtung aus zumindest einer an einer Seite der Hubschaufel angeordneten winkelförmigen Kulissenführung und aus einem von derselben gesteuerten Winkelhebel besteht, der mittels einer Kolben-Zylinder-Einheit zum Erfassen eines Bugrades in den vom Bugrad benutzten freien Bereich des gabelförmigen Aufnahmeraumes hinein und zum Freigeben eines Bugrades aus demselben wieder heraus verschwenkbar ist, wobei Kulissenführung und Winkelhebel zueinander entgegengesetzt öffnende Winkel bilden.

2. Schleppfahrzeug nach Anspruch 1, **dadurch gekennzeichnet, dass** das freie Ende des Winkelhebels eine oder mehrere Rollen zur Anlage am Bugrad aufweist.
